Europäisches Patentamt

European Patent Office

Office européen des brevets

(11) Publication number: **0 086 266**
**B1**

# EUROPEAN PATENT SPECIFICATION

(45) Date of publication of patent specification: **08.07.87**

(21) Application number: **82110935.2**

(22) Date of filing: **26.11.82**

(51) Int. Cl.⁴: **G 02 B 6/38**

(54) **Optical connector plug for optical-fibre cables.**

(30) Priority: **27.11.81 JP 189301/81**

(43) Date of publication of application:
**24.08.83 Bulletin 83/34**

(45) Publication of the grant of the patent:
**08.07.87 Bulletin 87/28**

(84) Designated Contracting States:
**DE FR GB NL**

(56) References cited:
**DE-A-2 753 298**
**DE-A-2 935 538**
**GB-A-2 054 191**
**US-A-4 114 979**

(73) Proprietor: **DAI-ICHI SEIKO CO. LTD.**
**Namiki 2-30-1**
**Kawaguchi-shi Saitama-ken (JP)**

(72) Inventor: **Kashimura, Noritake**
**1432-38, Mikura Ohmiya-shi**
**Saitama-ken (JP)**
Inventor: **Saitoh, Hiroaki**
**8-25-503 Saiwaicho, 3-Chome Kawaguchi-shi**
**Saitama-ken (JP)**

(74) Representative: **Luyken, Richard, Dipl.-Phys.**
**Tal 27**
**D-8000 München 2 (DE)**

Courier Press, Leamington Spa, England.

## Description

The invention relates to a connector plug for an optical fiber cable of the type comprising an inner shield member housing an optical fiber to be connected, as well as reinforcing fibers surrounding the shield member, said connector plug comprising a bushing for inserting the inner shield member of the optical fiber cable therethrough, the rearward end portion of which is intended to receive the reinforcing fibers disposed around it, a tube member to be mounted around said rearward end portion of said bushing after the reinforcing fibers have been placed around the outer surface of said end portion of said bushing so that the reinforcing fibers are covered by said tube member, and a tightening nut adapted to be screwed onto said bushing so as to tighten and fix the reinforcing fibers onto said bushing through said tube member mounted therebetween.

In the drawings show

Fig. 1 a sectional view illustrating a known connector plug for an optical fiber cable,

Fig. 2 a sectional view illustrating a part of another known connector plug for an optical fiber cable and

Fig. 3 a sectional view illustrating the essential portion of the connector plug for an optical fiber cable according to the present invention.

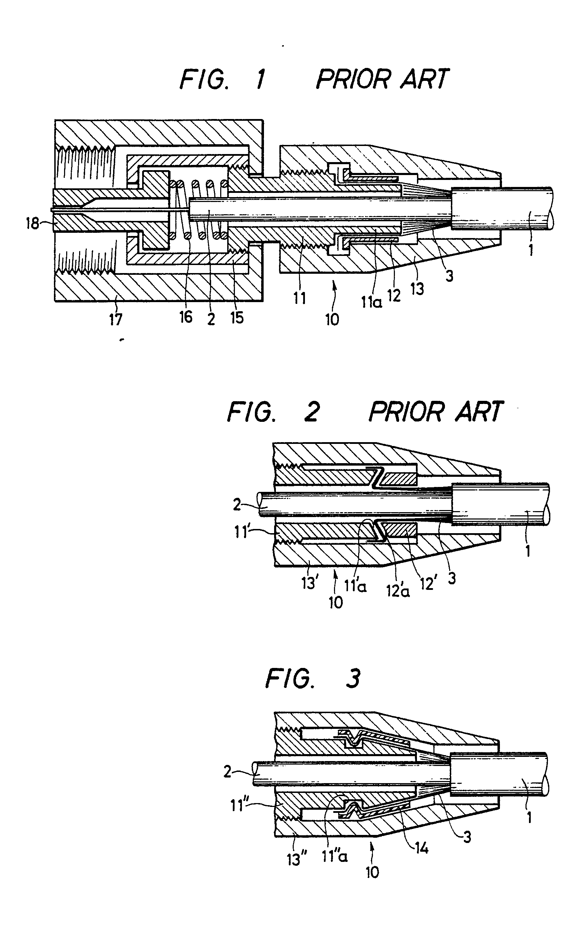

When mounting generally known connector plugs to optical fiber cables, an inner shield member 2 of an optical fiber cable 1 is inserted into a bushing 11 of a connector plug 10, as shown in Fig. 1, reinforcing fibers 3 (for example made of synthetic resin such as aromatic polyamide) of the optical fiber cable 1 are inserted into a space between an end portion 11a of the bushing 11 and a collar 12, and a tightening nut 13 is screwed onto the bushing 11 in order to thereby fix the connector plug to the optical fiber cable. At that time, it is necessary to firmly fix the reinforcing fibers 3 of the optical fiber cable 1 to the connector plug 10. In Fig. 1 numeral 15 designates a frame screwed onto the bushing 11, numeral 16 designates a spring, numeral 17 designates a nut and numeral 18 designates a ferrule for fixing the end of optical fiber of the optical fiber cable. Therefore, at present, the reinforcing fibers 3 are bonded to the end portion 11a of the bushing 11 by means of a bonding agent and, then, the collar 12 is mounted. However, this method has a disadvantage that the bonding agent adheres to portions other than the portion to be bonded to and, consequently, component parts of the connector plug set become dirty. Besides it takes time until the bonding agent dries.

Fig. 2 shows another known connector plug for an optical fiber cable as described on page 8 of the reports of the Technical Group, OQE 77-120 of the Institute of Electronics and Communication Engineers of Japan. In this case an end portion 11′a of a bushing 11′ and an end portion 12′a of a collar 12′ are formed to have tapered surfaces and it is so arranged that reinforcing fibers 3 are inserted into a space between those tapered surfaces and fixed by tightening a tightening nut 13′ so that the reinforcing fibers 3 are thereby held fixedly between the above-mentioned tapered surfaces. In this method, the reinforcing fibers are fixed comparatively powerfully because they are tightened by utilizing the tapered surfaces. However, even in this case, the reinforcing fibers cannot be fixed satisfactorily firmly and, therefore, it is necessary to firmly fix the reinforcing fibers by bonding them using a bonding agent in the same way as in the case of connector plug shown in Fig. 1. Consequently, the above-mentioned disadvantages occur in this case.

It is therefore, a primary object of the present invention to provide a connector plug for an optical fiber cable of the type indicated in the preamble, by which without using a bonding agent a satisfactorily firm fixing of the reinforcing fibers is effected.

This task is solved by the features specified in the characterizing part of claim 1.

To use a radially inwardly deformable tube for fixing reinforcing elements is known from DE—A—29 35 538.

Further advantageous improvements of the invention are characterized in the sub-claims.

In Fig. 3 showing an embodiment of the connector plug according to the present invention, numeral 1 designates an optical fiber cable, numeral 2 designates an inner shield member constitutive of the optical fiber cable 1, numeral 3 designates reinforcing fibers constitutive of the optical fiber cable 1, and these are the same as those shown in Figs. 1 and 2. Numeral 10 designates the connector plug, numeral 11″ designates a bushing constitutive of the connector plug 10, numeral 13″ designates a tightening nut constitutive of the connector plug 10, and these are also constructed to have shapes similar to those of known connector plugs shown in Figs. 1 and 2. Numeral 14 designates a tube made of thermoshrinkable plastic material.

The connector plug according to the present invention constructed as described above is arranged to firmly fix the reinforcing fibers as explained below. That is, the inner shield member 2 of the optical fiber cable 1 is inserted into the bushing 11″ and end portions of the reinforcing fibers 3 are placed around the outer surface of the end portion of the bushing 11″. After that, the thermo-shrinkable tube 14 is attached to the end portion of the bushing 11″ so that it covers the end portions of the reinforcing fibers 3 placed around the outer surface of the end portion of the bushing 11″. Then, the thermo-shrinkable tube 14 is shrunk by heating it, and the reinforcing fibers 3 are thereby fixed firmly between the bushing 11″ and tube 14. After that, the tightening nut 13″ is screwed onto the bushing 11″. When the bushing 11″ is formed to have an annular concave portion or groove 11a″ as shown in Fig. 3, a part of the tube 14 enters the concave portion 11″a at the time of shrinkage. As a result, after the tube 14 shrinks and hardens, the reinforcing fibers are perfectly fixed by the concave portion 11″a and convex portion of the tube 14 which entered the concave portion 11″a. Therefore, the fixing effect is extremely large. Besides, as the tube 14 is tightened by the tightening nut 13″, the effect for tightening the reinforcing fibers is still larger.

Moreover, when the end portion of the bushing 11″ is arranged to have a tapered outer surface and the tightening nut 13″ is arranged to have a tapered inner surface as shown in Fig. 3, the reinforcing fibers are fixed still more reliably.

The heating process for shrinking the thermo-shrinkable tube may be carried out after screwing the tightening nut 13″.

As described in the above, the connector plug according to the present invention is arranged to fix the reinforcing fibers of the cable by utilizing shrinkage of the tube made of thermo-shrinkable material. Therefore, it is not necessary to bond the reinforcing fibers by a bonding agent and, consequently, the component parts of the plug and related parts are not stained with the bonding agent. Besides, as the time for drying the bonding agent is not required, it is possible to shorten the working time for connecting the optical fiber cables. Moreover, as the assembling process is simple, it is convenient for the connecting work.

**Claims**

1. A connector plug (10) for an optical fiber cable (1) of the type comprising an inner shield member (2) housing an optical fiber to be connected as well as reinforcing fibers (3) surrounding the shield member (2), said connector plug comprising a bushing (11″) for inserting the inner shield member (2) of the optical fiber cable (1) therethrough, the rearward end portion of which is intended to receive the reinforcing fibers (3) disposed around it, a tube member (14) to be mounted around said rearward end portion of said bushing (11″) after the reinforcing fibers (3) have been placed around the outer surface of said end portion of said bushing so that the reinforcing fibers (3) are covered by said tube member (14), and a tightening nut (13″) adapted to be screwed onto said bushing (11″) so as to tighten and fix the reinforcing fibers (3) onto said bushing through said tube member (14) mounted therebetween, characterized in that the tube member (14) is made of thermo-shrinkable material so as to further fix the reinforcing fibers (3) onto the rearward end portion of the bushing (11″) by radial inward forces when having been mounted around said reinforcing fibers (3) and said bushing (11″) and shrunk by heating.

2. A connector plug according to claim 1, wherein an annular groove (11″a) is formed in the outer surface of said bushing (11″).

3. A connector plug according to claim 1, wherein said rearward end portion of said bushing (11″) is formed to have a tapered outer surface and said tightening nut (13″) is formed to have a tapered inner surface.

4. A method of assembling a connector plug according to claim 1, characterized in that the heating of the thermo-shrinkable tube (14) is effected after the tightening nut (13″) has been screwed on the bushing (11″).

**Patentansprüche**

1. Verbindungsstecker (10) für ein optisches Faserkabel (1), bestehend aus einem inneren Schutzelement (2) mit einer zu verbindenden optischen Faser und das Schutzelement (2) umgebenden Verstärkungsfasern (3), wobei der Verbindungsstecker eine Buchse (11″) zur Aufnahme des inneren Schutzelements (2) des optischen Faserkabels (1) besitzt, deren hinterer Endabschnitt die um sie angeordneten Verstärkungsfasern (3) aufnimmt, einem nach Anordnung der Verstärkungsfasern (3) um die äußere Oberfläche des hinteren Endabschnitts der Buchse auf den hinteren Endabschnitt der Buchse (11″) aufzuziehenden Schlauch (14), so daß die Verstärkungsfasern (3) von dem Schlauch (14) bedeckt sind, und einer Dichtnut (13″), die auf die Buchse (11″) geschraubt wird, um die Verstärkungsfasern (3) auf der Buchse durch den dazwischen angeordneten Schlauch (14) zu befestigen, dadurch gekennzeichnet, daß der Schlauch (14) aus thermoschrumpfbarem Material besteht, um dadurch die Verstärkungsfasern (3) durch radiale innere Kräfte noch fester auf dem hinteren Endabschnitt der Buchse (11″) zu befestigen, nachdem er über die Verstärkungsfasern (3) und die Buchse (11″) gezogen wurde und durch Erhitzen geschrumpf ist.

2. Verbindungsstecker nach Anspruch 1, dadurch gekennzeichnet, daß auf der äußeren Oberfläche der Buchse (11″) eine ringförmige Aussparung (11″a) gebildet ist.

3. Verbindungsstecker nach Anspruch 1, dadurch gekennzeichnet, daß der hintere Teil der Buchse (11″) eine konische Außenfläche und die Dichtnut (13″) eine konische Innenfläche besitzt.

4. Verfahren zur Montage des Verbindungssteckers nach Anspruch 1, dadurch gekennzeichnet, daß das Erhitzen des thermoschrumpfbaren Schlauchs (14) erfolgt, nachdem die Dichtnut (13″) auf die Buchse (11″) geschraubt ist.

**Revendications**

1. Fiche de connexion (10) pour câble de fibre optique (1) qui consiste:

en un élément de protection interne (2) avec une fibre optique à raccorder et des fibres de renforcement (3) entourant l'élément de protection (2) où la fiche de connexion est pourvu d'une douille (11″) pour accueillir l'élément de protection interne (2) du câble de fibre optique (1) la queue de la section finale de laquelle accueillant les fibres de renforcement (3) placées autour d'elle et en un tuyau (14) à monter sur la queue de la section finale de la douille (11″) après l'arrangement des fibres de renforcement (3) sur la surface extérieure de la queue de la section finale de la douille, de manière que les fibres de renforcement (3) sont couvert du tuyau (14) et en une rainure pour la garniture étanche (13″) étant vissée sur la douille (11″) afin de fixer les fibres de renforcement (3) sur la douille par moyen du tuyau (14) intermédiaire, caractérisé par le fait que le tuyau (14) consiste en matière thermo-retractable pour ainsi fixer de façon plus ferme par des forces radiales internes les fibres de renforcement (3) sur la queue de la section finale de la douille (11″) après qu'il a été monté sur les fibres de renforcement (3) et sur la douille (11″) et s'étant contracté par rechauffage.

2. Fiche de connexion selon la revendication 1, caractérisé par le fait que sur la surface externe de la douille (11″) il se trouve une rainure annulaire (11″a).

3. Fiche de connexion selon la revendication 1, caractérisé par le fait que la section finale de la douille (11″) est pourvu d'une surface externe conoïdale et la rainure pour la garniture étanche (13″) est pourvu d'une surface interne conoïdale.

4. Procédé pour montage de la fiche de connexion selon la revendication 1, caractérisé par le fait que le rechauffage du tuyau thermo-retractable (14) se fait après la rainure pour la garniture étanche étant vissée sur la douille (11″).

## FIG. 1 PRIOR ART

## FIG. 2 PRIOR ART

## FIG. 3